# EUROPEAN PATENT SPECIFICATION

(11) **EP 1 979 203 B1**
(45) Date of publication and mention of the grant of the patent: **06.11.2013**
(21) Application number: 07709202.1
(22) Date of filing: 19.01.2007
(51) Int. Cl.: B60R 21/13

(54) **IMPROVEMENTS RELATING TO ROLL OVER PROTECTION SYSTEMS**
VERBESSERUNGEN IM ZUSAMMENHANG MIT ÜBERSCHLAGSCHUTZSYSTEMEN
SYSTEME DE PROTECTION EN CAS DE RENVERSEMENT AMELIORE

(30) Priority: 20.01.2006 NO 20060303
(43) Date of publication of application: 15.10.2008
(73) Proprietor: Benteler Automobiltechnik GmbH, 33102 Paderborn (DE)
(72) Inventor: MUNDAL, Stein, Helge, N-2830 Raufoss (NO); PEDERSEN, Roald, Helland, N-2818 Gjøvik (NO); HOLTHE,Ragnar, N-2830 Raufoss (NO); HØGSETH, Kjell, N-2830 Raufoss (NO); PEJAKOVIC, Nikola, 85764 Oberschleissheim (DE); BERGER, Karl, Kristian, N-2816 Gjovik (NO)
(74) Representative: Ksoll, Peter
(86) International application number: PCT/NO2007/000019
(87) International publication number: WO 2007/084010

(56) References cited:
- WO-A-91/02669
- WO-A1-91/02669
- WO-A1-98/00249
- DE-A1- 10 049 180
- DE-A1- 10 209 811
- DE-C1- 4 205 308
- US-A- 4 592 571
- US-A1- 2003 015 898

## Description

The present invention relates to a Roll Over Protection System (ROPS) for a vehicle such as a passenger car, for instance a car with retractable roof of soft or hard type, with glass roof or the like. In particular, the present invention relates to an improved system having a movable roll over bar.

There are a great number of roll over protections systems provided with a movable roll over bar suggested in the prior art. These systems can be divided in three main categories due to the mechanism that extends and guides the roll over bar. The movement of the roll over bar can be linear, curvelinear or rotational.

DE 197 81 828 T1 discloses a roll over protection system where the bar is made out of only one extrusion, and is associated with a simple process to fabricate it. The bar legs are interconnected by means of an interconnecting plate that is partly cut away. The bar can be pushed up in a linear movement from a storage position to an extended position in case of a crash situation.

One example of moving the roll over bar in a curved plane (curvelinear motion) is disclosed in DE 3927265.

US 4,592,571 discloses a roll bar for a motor vehicle of the convertible type. The roll bar is arranged in a manner where it is swung up in from a mainly horizontal position to a mainly vertical position in the case of an overturn of the vehicle. Thus, the roll bar is brought to its extended position by a plain rotational movement.

DE 102 09 811 A1 discloses a roll over bar that is provided with a mechanism that moves the bar in a motion combined of translation and rotation, wherein the roll over bar is connected to one end of at least one pivot arm by means of a pivot, wherein said pivot arm is connected to frame at one second end by means of a pivot.

With the present invention there is provided a new mechanism for extending the roll over bar. The system is giving advantages both within the protective scope in the case of a roll over accident, as well as cost- and other benefits, such as: Improved space utilisation, less dependency on manufacturing tolerances and an improved guiding system.
In accordance with the present invention it is possible to improve crash protection for occupants seated in a vehicle.

These and further advantages can be achieved in accordance with the present invention as defined in the accompanying claims.

In the following, the invention shall be further described by examples and figures where:
- Fig. 1: discloses schematically in a side view an extendable roll over bar, in its retracted position,
- Fig. 2: discloses the roll over bar in the same view, where the bar is in its extended position,
- Fig. 3: discloses in one embodiment an extendable roll over bar in a retracted position, seen from the back of the car,
- Fig. 4: discloses the roll over bar of Fig. 4 in an extended position,
- Fig. 5: discloses one second embodiment of a roll over bar.

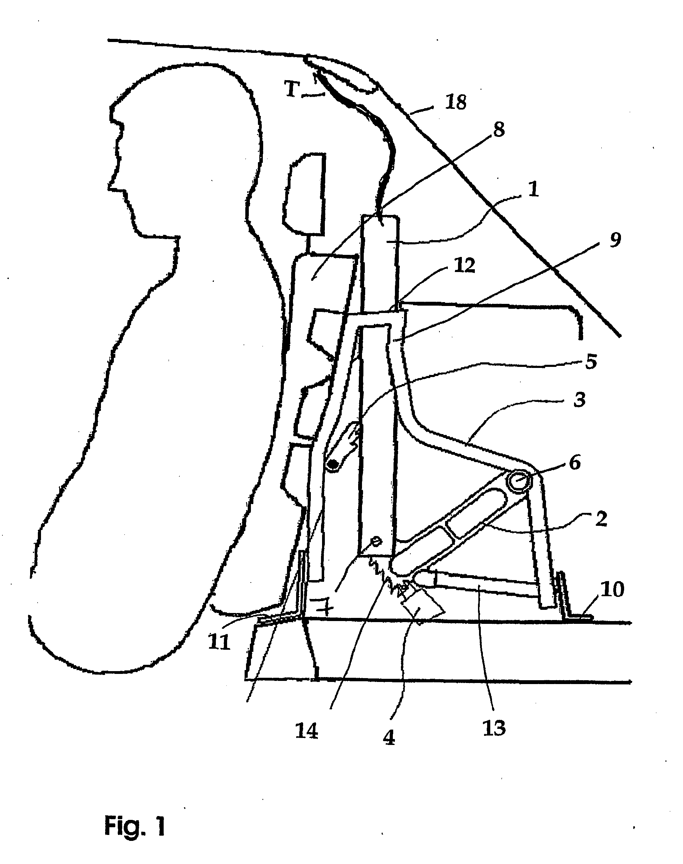

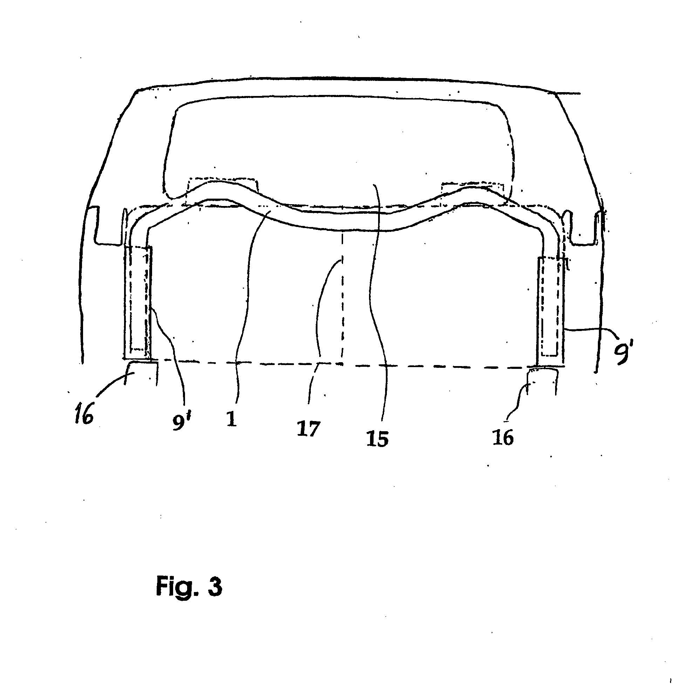

As disclosed in Fig. 1, a roll over bar 1 is arranged in a vehicle behind an occupant's seat 8.. It should be understood that the roll over system can include one roll over bar for each occupant seat, or there can be just one wide roll over bar covering plural seats. The main components of the system is integrated in a frame 9, that is mounted in the vehicle structure (see reference numeral 16 in Fig. 3) by fixation means 10,11. The frame can be constituted by a shell-like structure (cassette) or by integrated structural beams. However, where appropriate, the system can be mounted in the structure of the car without the use of a frame, or by two cassette modules 9' mounted at each side of the car 16 (Fig. 3).

The roll over bar 1 is in its retracted position extending somewhat above one top opening 12 in the frame. The lower part of the roll over bar, which is normally constituted by one pair of legs (only one shown) is connected to a corresponding pair of pivot arms 2 by pivot joints 7 (only one shown in the figure). The opposite ends of the pivot arm 2 are attached to the frame by a second pivot 6. A holding/release device 4 (commonly denoted as actuator) secures the pivot arm against unintended movement with a force that opposes the force of a pre-tensioned energy source 13. The energy source may be of a telescopic type with a linear movement. Further, it may be of a commonly known type such as spring based, pyrotechnical, pneumatic, gas-pressurised or hydraulic. In one embodiment, a torque spring could be arranged at pivot 6 as energy source. The purpose of the energy source is to energize the extension movement of the roll over bar.

One locking pawl 5 is arranged at one substantial vertical part of the frame, for locking the extendable roll over bar in its extended position. See also the description of the toothed rack 14 below.

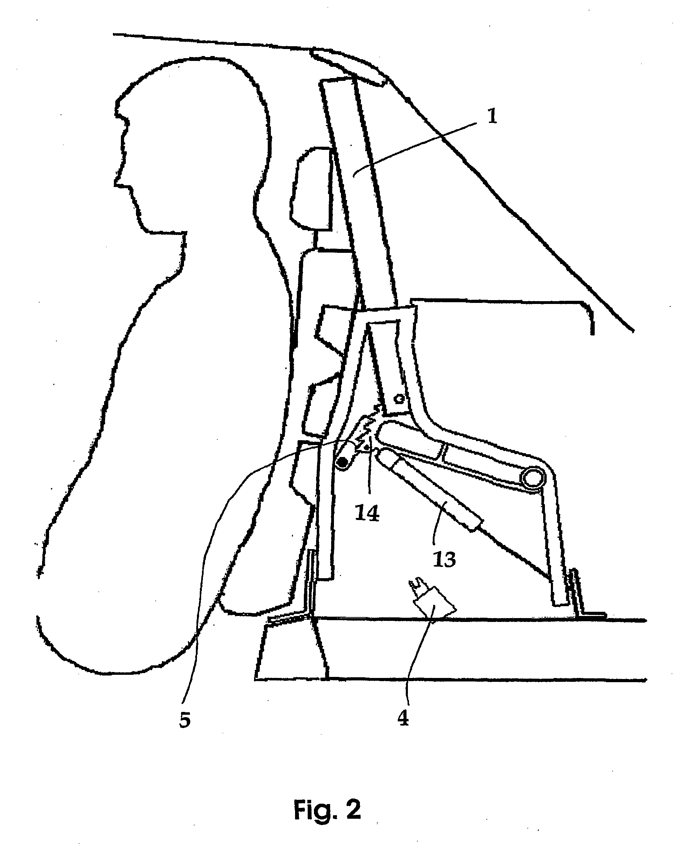

As shown in Fig. 2, the roll over bar system has been activated by a sensed hazard condition or the like, and the roll over bar is brought to its extended position by the energy source. The locking pawl is pre-tensioned in a clockwise rotational direction, preferably by means of a spring, and is in firm engagement with the rack 14 in its locked position.

The holding/release device 4 can be of known type, for de-activating the holding force against the static, pre-tensioned force set up by the energy source 13. Such holding/release devices can be of electromagnetic, pyrotechnical, mechanical or of any other appropriate type.

The gap between the walls in the top opening 12 of the frame 9 (see Fig. 1) and the legs of the bar passing through, as well as the geometry of the walls, allows for the angular deviation of said legs when they move through said opening. The top opening 12 can be provided with low friction surfaces for the smooth guiding of the roll over bar. In addition, it may be provided with tiltable supporting surfaces that adapt its guiding surface(-s) to the combined motion (explained below) of the legs of the roll over bar.

The mechanism and the way the main components of the system are linked, will provide a complex movement of the roll over bar from its retracted position to its extended position. The movement will be a combination of translational and rotational movement. This movement has shown to be very effective and advantageous in many ways. As the roll over bar approaches the flexible top of the convertible, this movement results in a smooth approach to the top or roof 18 (Fig. 1), which itself may fluctuate due to speedy wind effects in case of a soft top. See also the indicated trajectory T followed by the top part of the bar in Fig. 1.

Further, the combined movement of the roll over bar will make it possible to obtain a favourable "gear ratio" between the energy source and the movement of the roll over bar, in particular if the energy source is arranged substantially perpendicular to the "knee" of the mechanism, i.e. acting in the area of the pivot 7 between pivot arm 2 and roll over bar 1. The other end of the energy source may then advantageously be attached to the frame 9 in the region of the fixation means 10. This will result in a fast initial move of the roll over bar and an enforced movement at the end of its course.

Still further, the movement of the roll over bar can allow that the roll over bar will follow substantially parallel to or alongside the inner surface of the closed soft top roof of the vehicle. This can safeguard the full extension of the roll over bar without being hindered by the roof. Further, the roll over bar can be brought to an extended position at the top of and at the sides of the seats or its headrests, to optimise the protection of the occupants. Thus, the motion of the upper part of the roll over bar has both one vertical component and one horizontal, forwardly directed component that can be exploited in a very advantageous manner. This can effectively improve the protected room of the vehicle.

It is also well known that on many passenger cars the bulk of the retracted soft roof mechanism limits the possibility to extend a roll over protecting system directly upwards from a position at the side of the seat backs. It is here realized that owing to the trajectory of this new system, it is now possible to reach a further forward position with the top of the system than hereto, allowing for, in some cases, a better protection of the occupants.

It should be understood that depending of the position of the pivot 6, the length of the pivot arm 2 and the length of the legs of the roll over bar 1, the top of the bar can be brought to its extended position following a pre-defined path adapted to various vehicle configurations.

For instance, in the embodiment shown in Fig. 1, the top part of the roll over bar will follow a mainly "S" shaped trajectory T from its retracted position to its extended position, due to the arrangement and position of the pivot 6 and 7 together with the arm 2.

A mainly "C" shaped trajectory can be provided if the pivot 6 of arm 2 is arranged in a position below pivot 7.

Further, if the pivot 6 is arranged in front of the pivot 7, and below the vertical level of said pivot, the trajectory will be mainly an inversed "C". Still further, if the pivot 6 is arranged in front of pivot 7 and above the vertical level of pivot 7, then the trajectory will mainly follow an inversed "S".

This is due to the motion allowed by the links and the levers in the mechanical system.

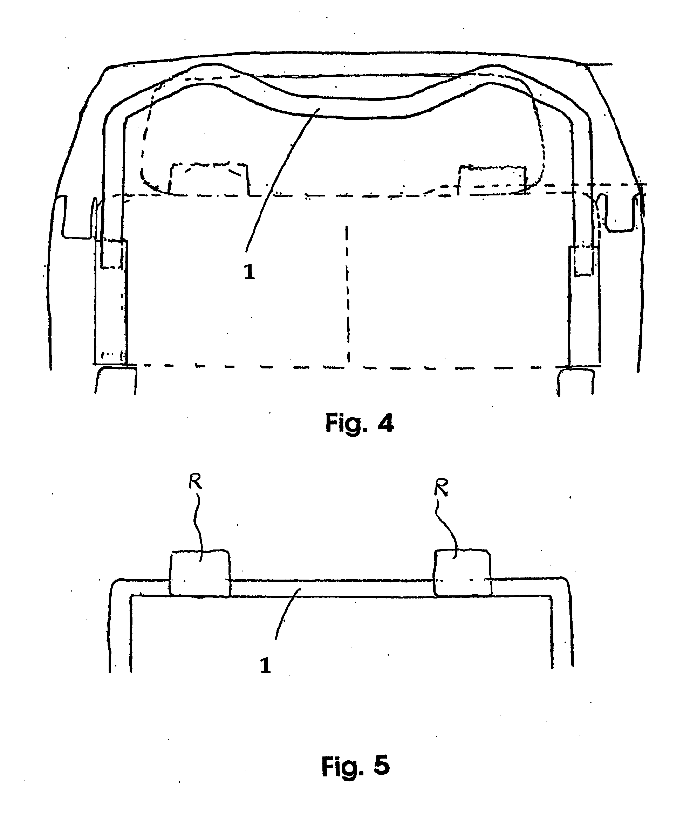

In Fig. 3 there is disclosed one embodiment of an extendable roll over bar in a retracted position, seen from the back of the car. The roll over bar 1 reaches from one side of the vehicle to the other allowing baggage to be stored between the frame 9' (seen as cassette modules) after the seat back 17 has been tilted or removed. The special shape of the bar, which is higher in the head area and lower in the middle and at the ends, will not restrict the rear view through window 15 and allows a smaller cassette design. In the extended position, see Fig. 4, the top of the bar 1 is brought to its end position also with a closed roof.

As shown In Fig. 5, the shape of the roll over bar could be flat with some additional features such as head rests R mounted in the head area.

It is recognized that said roll over bar that can be U-shaped (the U arranged upside down), can be made out of tubes consisting of separately fabricated tubes which are connected to each other by structural connection means, or as one single, formed tube.

Another beneficial design is to have a single wide, box-shaped tube for each unit.
Here the box section may be divided into apertures by dividing walls, and may very beneficially be made as an aluminium extrusion.

One further such section may consist of two tubes linked to each other by a reinforcing wall.

On both said designs, the strength of the units may be varied over their height by taking away parts of said walls.

The tubes may be of a square cross-section, possibly with inverted sidewalls. Other tube sections may be applied, such as circular or semi-circular, elliptical and of polygon type with a plurality of side surfaces, or any given combination of said cross-sections along the lengths of the tubes.

The improved guiding of the roll over bar makes the guiding action during the extension of the system less dependent on the tolerances of the tubes, which is beneficial both when it comes to the need for (costly) small tolerances, as well as securing a consistent action of extension. This robust action of the system can be achieved through designing the pivots 6 and 7 and the connections to the actuator 4 and energy source 13 with sufficient play to allow out-of plane displacements of the pivot point 7 without introducing resistance forces in the system. The so-called drawer-effect can then be avoided, and the system is more tolerant for movements of the supports 16 in the car caused by crash deformations and other deformations.

It should be understood that the roll over bar can be constituted by any appropriate structure, for instance a plate-like construction. The trajectory to be performed by the roll over bar must then be adapted specially to the interior elements of the car.

The guiding system 12 can be encapsulated, for instance by a lid arranged at the top of the frame 9.

The formed parts of the roll over bar system may be secured by welding or by any other appropriate means of joining.

One or more components of the system can be made out of aluminium or an aluminium alloy. However any other appropriate material can be applied as well.

It should be understood that the system may apply one or more holding/release means.

In one other embodiment (not shown), the system can be constituted of one single mechanical unit including a pivot 6, a pivot arm 2, one energy source and one holding/release device and further components necessary. Preferably, such unit is fixed in the middle of the car (seen in its transversal direction). In said embodiment, the roll over bar can extend substantially in the whole width of the car.

## Claims

1. Roll over protection system for a vehicle such as a passenger car, comprising at least one roll over bar (1) that is movably arranged in the car and can be moved from a first retracted position to a second extended position, wherein the roll over bar is provided with a mechanism that moves the said bar in a motion combined of translation and rotation, wherein the said motion has a vertical component and at least one horizontal component, wherein the roll over bar (1) is connected to one end of at least one pivot arm (2) by means of a pivot (7), wherein the said pivot arm (2) is connected to a frame (9) at one second end by means of a pivot (6),
**characterised in that**
the roll over bar (1) is supported by a guiding that is positioned beneath the uppermost part of the bar (1) when it is in a retracted position, wherein a gap between walls in a top opening (12) of said guiding and legs of the bar (1) passing through, as well as the geometry of the walls, allows for the angular deviation of said legs when they move according to said motion through said top opening (12).

2. Roll over protection system in accordance with claim 1,
**characterised in that**
the said at least one horizontal component of movement is directed in the forward direction of the car, with respect to of the upper part of the roll over bar.

3. Roll over protection system in accordance with claim 1,
**characterised in that**
the upper part of the roll over bar moves along a "S" shaped or "C" shaped trajectory.

4. Roll over protection system in accordance with claim 1,
**characterised in that**
the upper part of the roll over bar moves along an inverted "S" shaped or "C" shaped trajectory.

5. Roll over protection system in accordance with claim 1,
**characterised in that**
the said guiding may have tilting surfaces.

6. Roll over protection system in accordance with claim 1,
**characterised in that**
the rollover bar is one single wide unit covering the width of the car.

7. Roll over protection system in accordance with claim 1,
**characterised in that**
there are two roll over bars, each covering one occupant seat in the car.

## Patentansprüche

1. Überrollschutzystem für ein Fahrzeug wie einen Personenwagen, umfassend mindestens einem Überrollbügel (1), der beweglich im Fahrzeug angebracht ist und von einer ersten eingefahrenen in eine zweite ausgefahrene Position bewegt werden kann, wobei der Überrollbügel mit einem Mechanismus versehen ist, der den Bügel in einer kombinierten Bewegung aus Parallelverschiebung und Rotation bewegt, wobei die Bewegung eine vertikale und mindestens eine horizontale Komponente aufweist, wobei der Überrollbügel (1) mit einem Ende von mindestens einem Schwenkarm (2) mittels eines Gelenks (7) verbunden ist, wobei der Schwenkarm (2) mit einem Rahmen (9) an einem zweiten Ende mittels eines Gelenks (6) verbunden ist,
**dadurch gekennzeichnet, dass**
der Überrollbügel (1) durch eine Führung gelagert ist, die unter dem obersten Teil des Bügels (1) in dessen eingefahrene Position positioniert ist, wobei ein Zwischenraum zwischen Wänden in einer oberen Öffnung (12) der Führung und hindurchgehenden Schenkeln des Bügels (1), sowie die Wandgeometrie, eine Winkelabweichung der Schenkel entsprechend der Bewegung durch die obere Öffnung (12) ermöglichen wenn diese sich bewegen.

2. Überrollschutzsystem nach Anspruch 1,
**dadurch gekennzeichnet, dass**
die mindestens eine horizontale Bewegungskomponente in die Vorwärtsrichtung des Wagens gelenkt wird, bezogen auf den oberen Teil des Überrollbügels.

3. Überrollschutzsystem nach Anspruch 1,
**dadurch gekennzeichnet, dass**
sich der obere Teil des Überrollbügels entlang einer als S oder C geformten Bahn bewegt.

4. Überrollschutzsystem nach Anspruch 1,
**dadurch gekennzeichnet, dass**
sich der obere Teil des Überrollbügels entlang einer als umgekehrtes S oder C geformten Bahn bewegt.

5. Überrollschutzsystem nach Anspruch 1,
**dadurch gekennzeichnet, dass**
die Führung geneigte Flächen aufweisen kann.

6. Überrollschutzsystem nach Anspruch 1,
**dadurch gekennzeichnet, dass**
der Überrollbügel eine einzige breite Einheit über die gesamte Breite des Wagens hinweg darstellt.

7. Überrollschutzsystem nach Anspruch 1,
**dadurch gekennzeichnet, dass**
es zwei Überrollbügel gibt, die jeweils einen Insassensitz im Wagen abdecken.

## Revendications

1. Système de protection en cas de retournement pour un véhicule, tel qu'une voiture de passagers, comprenant au moins une barre de retournement (1), qui est aménagée mobile dans la voiture et peut être déplacée d'une première position en retrait à une seconde position en extension, dans lequel la barre de retournement est pourvue d'un mécanisme qui déplace ladite barre dans un mouvement combiné de translation et de rotation, dans lequel ledit mouvement a une composante verticale et au moins une composante horizontale, dans lequel la barre de retournement (1) est raccordée à une extrémité d'au moins un bras de pivot (2) au moyen d'un pivot (7), dans lequel ledit bras de pivot (2) est raccordé à un châssis (9) à une seconde extrémité au moyen d'un pivot (6),
**caractérisé en ce que**
la barre de retournement (1) est supportée par un système de guidage qui est positionné en dessous de la partie la plus haute de la barre (1) lorsque celle-ci se trouve en position de retrait, dans lequel un intervalle compris entre les parois d'une ouverture supérieure (12) dudit système de guidage et les jambes de la barre (1) qui la traversent, ainsi que la géométrie des parois, permettent une déviation angulaire desdites jambes lorsqu'elles se déplacent conformément audit mouvement à travers ladite ouverture supérieure (12).

2. Système de protection en cas de retournement selon la revendication 1,
**caractérisé en ce que**
ladite au moins une composante horizontale de mouvement est dirigée dans le sens avant de la voiture par rapport à la partie supérieure de la barre de retournement.

3. Système de protection en cas de retournement selon la revendication 1,
**caractérisé en ce que**
la partie supérieure de la barre de retournement se déplace le long d'une trajectoire en forme de « S » ou de « C ».

4. Système de protection en cas de retournement selon la revendication 1,
**caractérisé en ce que**
la partie supérieure de la barre de retournement se déplace le long d'une trajectoire en forme de « S » ou de « C » à l'envers.

5. Système de protection en cas de retournement selon la revendication 1,
**caractérisé en ce que**
ledit système de guidage peut avoir des surfaces inclinées.

6. Système de protection en cas de retournement selon la revendication 1,
**caractérisé en ce que**
la barre de retournement constitue une unité large unique couvrant la largeur de la voiture.

7. Système de protection en cas de retournement selon la revendication 1,
**caractérisé en ce que**
il y a deux barres de retournement, chacun couvrant un siège d'occupant dans la voiture.
